(19) Europäisches Patentamt

European Patent Office

Office européen des brevets

(11) Veröffentlichungsnummer: **0 302 291**

**A1**

(12) **EUROPÄISCHE PATENTANMELDUNG**

(21) Anmeldenummer: **88111536.4**

(22) Anmeldetag: **18.07.88**

(51) Int. Cl.4: **G01B 21/04 , G01D 11/30**

(30) Priorität: **17.07.87 DE 3723768**

(43) Veröffentlichungstag der Anmeldung:
**08.02.89 Patentblatt 89/06**

(84) Benannte Vertragsstaaten:
**ES FR GB IT**

(71) Anmelder: **MORA FABRIK FUR MESSGERÄTE HELMUT FREUND GMBH**
**Dieselstrasse 5**
**D-8750 Aschaffenburg(DE)**

(72) Erfinder: **Seckendorf, Paul**
**Behringerstrasse 38**
**D-8752 Mainaschaff(DE)**

(74) Vertreter: **Dorner, Jörg, Dr.-Ing. et al**
**Dorner & Hufnagel Patentanwälte**
**Ortnitstrasse 20**
**D-8000 München 81(DE)**

(54) Am Ende eines Querarms eines Mess-oder Anreissgerätes befestigbarer Aufnahmekopf.

(57) Bei einem Aufnahmekopf zur Halterung eines Meß- oder Anreißwerkzeugs an einem Koordinaten-Meß- oder-Anreißgerät wird eine hohe Stabilität gleichzeitig mit minimalem Raumbedarf auch dann erreicht, wenn die Einstellbewegungen um eine Drehachse und eine Schwenkachse mittels elektromotorischer Antriebe (52, 76) erfolgen. Hierzu ragt von einem mit dem Meß- oder Anreißgerät gekuppelten Anschlußstück die Drehachse als mit dem Anschlußstück drehfest verbundener Achsenstumpf (6) weg, der mit einem Zahnkranz (8) versehen ist, in den ein Antriebsritzel (42) eines Drehantriebs (52, 49, 47) eingreift, welcher an einem Aufnahmekopf-Zwischenstück befestigt ist, das an dem Achsenstumpf gelagert ist, seinerseits zur Lagerung der Schwenkachse dient und außer dem Drehantrieb auch den Schwenkantrieb (76) trägt, dessen Abtriebsritzel (68) in einen an der Schwenkachse vorgesehenen und drehfest damit verbundenen Zahnkranz (66) eingreift. Durch diese Anordnung gelingt es, den Drehantrieb und den Schwenkantrieb mit Bezug auf die Drehachse in diese koaxial umgebenden einander teilweise durchsetzenden Zylinderräumen oder Hohlzylinderräumen unterzubringen und die Dreheinstellbewegungen bzw. Schwenkeinstellbewegungen durchzuführen, ohne daß sich der Drehantrieb und der Schwenkantrieb relativ zueinander bewegen.

FIG.1

## Am Ende eines Querarms eines Meß- oder Anreißgerätes befestigbarer Aufnahmekopf

Die Erfindung betrifft einen am Ende eines Querarms eines Meß- oder Anreißgerätes befestigbaren Aufnahmekopf mit den Merkmalen des Oberbegriffes von Patentanspruch 1. Ein derartiger Aufnahmekopf ist aus der deutschen Offenlegungsschrift 34 40 527 bekannt.

Soll ein derartiger Aufnahmekopf zur Einstellung seiner Befestigungsvorrichtung für das anzusetzende Meß- oder Anreißwerkzeug unter Verschwenkung um eine Schwenkachse und unter Verdrehung um eine Drehachse mit motorischen Antrieben versehen werden, so ergibt sich die Schwierigkeit, daß dann, wenn diese Antriebe im wesentlichen außerhalb der Umrisse eines normalen, solche Antriebe nicht enthaltenden Aufnahmekopfes vorstehen, der motorisch angetriebene Aufnahmekopf für viele Meß- und Anreißaufgaben an schwer zugänglichen Werkstücken oder Werkstückbereichen nicht eingesetzt werden kann. Wenn aber die motorischen Antriebe innerhalb der Umrisse eines normalen Aufnahmekopfes im vorstehenden Sinne untergebracht werden, ergeben sich größere Baulängen der einzelnen gegeneinander beweglichen Teile des Aufnahmekopfes und es müssen mitunter größere Querschnitte dieser Teile vorgesehen werden, derart, daß entweder die Stabilität und Schwingungsfestigkeit des Aufnahmekopfes vermindert wird oder aber wiederum eine Baugröße des Aufnahmekopfes erreicht wird, die bei der Erfüllung bestimmter Meß- und Anreißaufgaben an schwer zugänglichen Werkstückbereichen hinderlich ist.

Ein Beispiel für eine vergrößerte Baulänge eines Aufnahmekopfes der hier betrachteten, allgemeinen Art ohne motorischen Antrieb seiner Teile ist in der deutschen Offenlegungsschrift 34 06 045 beschrieben. Hier ist die größere Baulänge durch Unterbringung von inkrementellen Drehmeldern innerhalb der Umrisse des Aufnahmekopfes bedingt. Eine entsprechende Vergrößerung der Baulänge ergäbe sich bei Aufnahmeköpfen bekannter Konstruktion auch bei Unterbringung von elektromotorischen Antrieben innerhalb der Umrisse des Aufnahmekopfes.

Es ist weiter bei Bearbeitungsmaschinen, beispielsweise Laserschneidmaschinen, bekannt, den Aufnahmekopf zum Anschluß eines Bearbeitungswerkzeuges gegenüber einem Ausleger der betreffenden Werkzeugmaschine um eine Drehachse elektromotorisch verdrehbar und um eine Schwenkachse elektromotorisch verschwenkbar auszubilden. Die dabei verwendete Konstruktion führt jedoch zu einer vergleichsweise geringen Genauigkeit und einer vergleichsweise geringen Auflösung der Einstellung der Befestigungsvorrichtung für das Bearbeitungswerkzeug mit Bezug auf die Drehrichtung und die Schwenkrichtung, so daß die bekannten Aufnahmeköpfe für Bearbeitungsmaschinen nicht für Meß- und Anreißarbeiten höchster Genauigkeit und Auflösung geeignet sind und außerdem wegen ihres Raumbedarfes für solche Aufgaben an schwer zugänglichen Werkstückbereichen nicht eingesetzt werden können.

Darüberhinaus sind Bearbeitungsmaschinen der soeben erwähnten Art im allgemeinen außerordentlich teuer, weshalb ihr Einsatz für Meß- und Anreißarbeiten wirtschaftlich nicht vertretbar ist.

Durch die Erfindung soll die Aufgabe gelöst werden, einen Aufnahmekopf mit den Merkmalen des Oberbegriffes von Patentanspruch so auszugestalten, daß die motorische Verstellbarkeit seiner Befestigungsvorrichtung um eine Drehachse und eine Schwenkachse bei minimalem Raumbedarf und gleichzeitig großer Stabilität erreicht wird.

Diese Aufgabe wird erfindungsgemäß durch die kennzeichnenden Merkmale von Patentanspruch 1 gelöst.

Es ergibt sich, daß der hier angegebene Aufnahmekopf, obwohl seine Umrisse nicht wesentlich über diejenigen eines nicht motorisch einstellbaren Aufnahmekopfes hinausgehen, eine Stabilität aufweist, die den Einsatz eines mit diesem Aufnahmekopf ausgerüsteten Meß- und Anreißgerätes für Bearbeitungsaufgaben ermöglicht, die mit einer Genauigkeit durchgeführt werden können, welche der Genauigkeit und Auflösung der Einstellung des Aufnahmekopfes für Meß- und Anreißaufgaben entspricht.

Ein Aufnahmekopf der vorliegend angegebenen Art gestattet den Einsatz eines Koordinaten-Meß- und Anreißgerätes zur Gewinnung von Daten im sogenannten Teach-In-Betrieb, um dann mit den gewonnenen Daten eine Bearbeitungsmaschine, beispielsweise eine Laserschneidmaschine zu steuern, ohne daß für das Gewinnen der Daten in unwirtschaftlicher Weise eine bestimmte Betriebsdauer der betreffenden Bearbeitungsmaschine geopfert werden muß. Es versteht sich, daß in diesem Falle der hier angegebene Aufnahmekopf mit entsprechenden Stellungsmeldern, beispielsweise Resolvern, ausgerüstet ist.

Gemäß einer besonders vorteilhaften Ausgestaltung des Aufnahmekopfes der vorliegend angegebenen Art sind der Drehantriebsmotor und der Schwenkantriebsmotor und gegebenenfalls auch der Drehachse bzw. der Schwenkachse jeweils zugeordnete Resolver so angeordnet, daß bei Drehung des den Drehantriebsmotor und den Schwenkantriebsmotor und gegebenenfalls auch die Resolver tragenden Aufnahmekopf-Zwischenstückes der Drehantriebsmotor und gegebenenfalls der zugehörige Resolver einerseits und der Schwenkantriebsmotor und der gegebenenfalls zugehörige Resolver andererseits sich in einander in Axialrichtung mit Bezug auf die Drehachse teilweise durchsetzenden Zylinderräumen oder Hohlzylinderräumen bewegen. Dieser Bedingung müssen jedoch die Resolver, welche im allgemeinen geringere Abmessungen besitzen als die Antriebsmotoren, nicht notwendig genügen.

Im übrigen wird bezüglich vorteilhafter Ausgestaltungen und Weiterbildungen auf die dem Anspruch 1 nachgeordneten Patentansprüche verwiesen, deren Inhalt hierdurch ausdrücklich zum Bestandteil der Beschreibung gemacht wird, ohne an dieser Stelle den Wortlaut zu wiederholen.

Nachfolgend werden zwei Ausführungsbeispiele anhand der Zeichnung näher erläutert, wobei für einander entsprechende Teile jeweils gleiche Bezugszahlen verwendet sind. Es zeigen:

Fig. 1 einen Schnitt durch einen Aufnahmekopf der hier angegebenen Art gemäß einem ersten Ausführungsbeispiel längs einer durch die Drehachse gelegten Vertikalebene, wobei Teile des Aufnahmekopfes nicht geschnitten bzw. aufgebrochen dargestellt sind,

Fig. 2 einen Schnitt durch den Aufnahmekopf nach Figur 1 längs einer durch die Drehachse gelegten Horizontalebene,

Fig. 3 einen Schnitt durch den Aufnahmekopf nach Figur 1 entsprechend der in Figur 1 angedeuteten radialen Schnittebene B-B,

Fig. 4 in vergrößertem Maßstab einen Teilschnitt längs der in Figur 3 angedeuteten Schnittebene I-I,

Fig. 5 einen Schnitt längs der Figur 1 angedeuteten radialen Schnittebene A-A,

Fig. 6 einen Schnitt durch den Aufnahmekopf nach Figur 1 entsprechend der in Figur 1 angedeuteten radialen Schnittebene E-E,

Fig. 7 einen Schnitt durch den Aufnahmekopf nach Figur 1 entsprechend der in Figur 1 angedeuteten radialen Schnittebene F-F,

Fig. 8 einen Schnitt durch den in Figur 1 gezeigten Aufnahmekopf entsprechend der in Figur 1 angedeuteten radialen Schnittebene G-G,

Fig. 9 einen Schnitt durch den Aufnahmekopf nach den Figuren 1 und 2 entsprechend der in Figur 2 angedeuteten vertikalen, zur Drehachse parallelen Schnittebene K-K,

Fig. 10 einen Schnitt durch einen Aufnahmekopf der hier angegebenen Art entsprechend einer zweiten Ausführungsform, wobei die Schnittebene vertikal durch die Drehachse gelegt ist und Teile des Aufnahmekopfes nicht geschnitten bzw. aufgebrochen dargestellt sind,

Fig. 11 einen durch die Drehachse gelegten abgesetzten Horizontalschnitt entsprechend der in Figur 10 angedeuteten Schnittebene H-H,

Fig. 12 einen Schnitt durch den Aufnahmekopf gemäß Figur 10 entsprechend der in Figur 10 angedeuteten radialen Schnittebene B-B,

Fig. 13 einen Schnitt durch den Aufnahmekopf nach Figur 10 entsprechend der in Figur 10 angedeuteten Schnittebene A-A,

Fig. 14 einen Schnitt durch den Aufnahmekopf nach Figur 10 entsprechend der in Figur 10 angedeuteten Schnittebene E-E,

Fig. 15 einen Schnitt durch den Aufnahmekopf nach Figur 10 entsprechend der in Figur 10 angedeuteten radialen Schnittebene F-F,

Fig. 16 einen Schnitt durch den Aufnahmekopf nach Figur 10 entsprechend der in Figur 10 angedeuteten radialen Schnittebene G-G und

Fig. 17 einen Schnitt durch den Aufnahmekopf nach den Figuren 10 und 11 entsprechend der in Figur 11 angedeuteten, parallel zur Drehachse verlaufenden Schnittebene K-K.

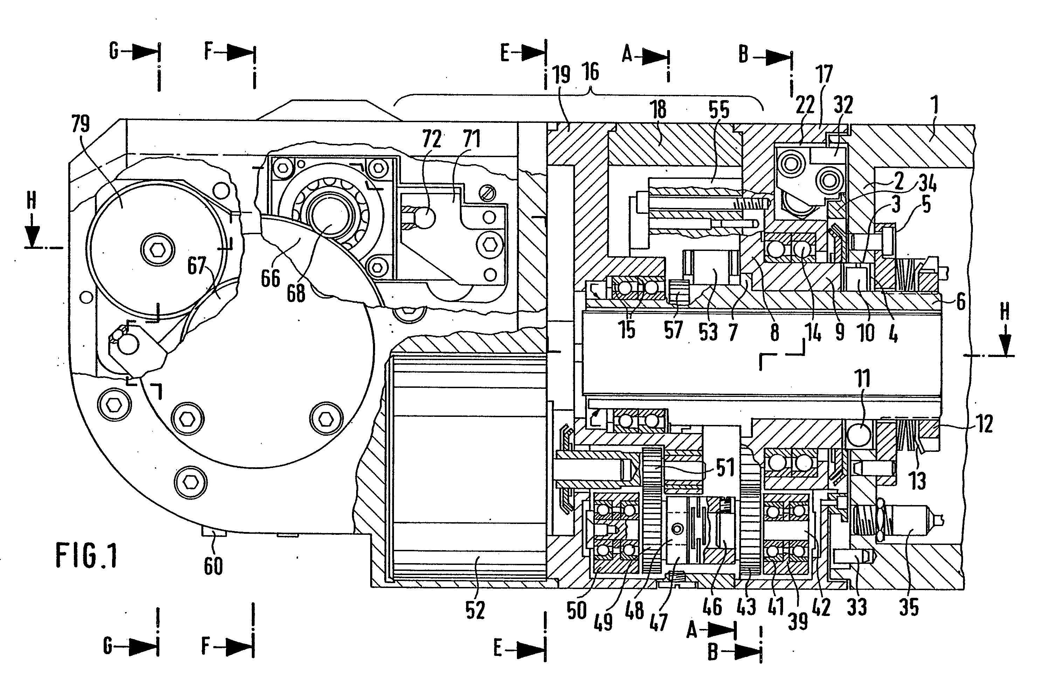

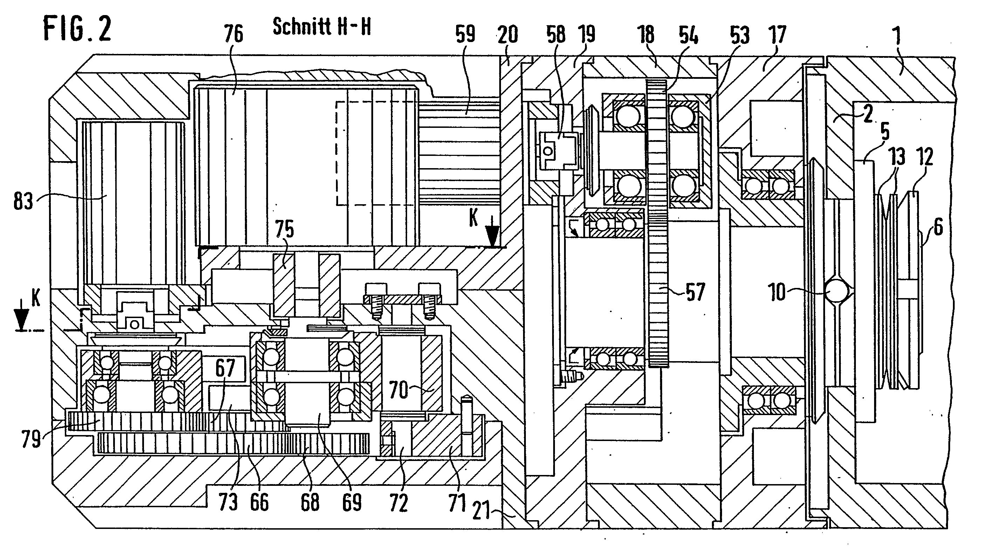

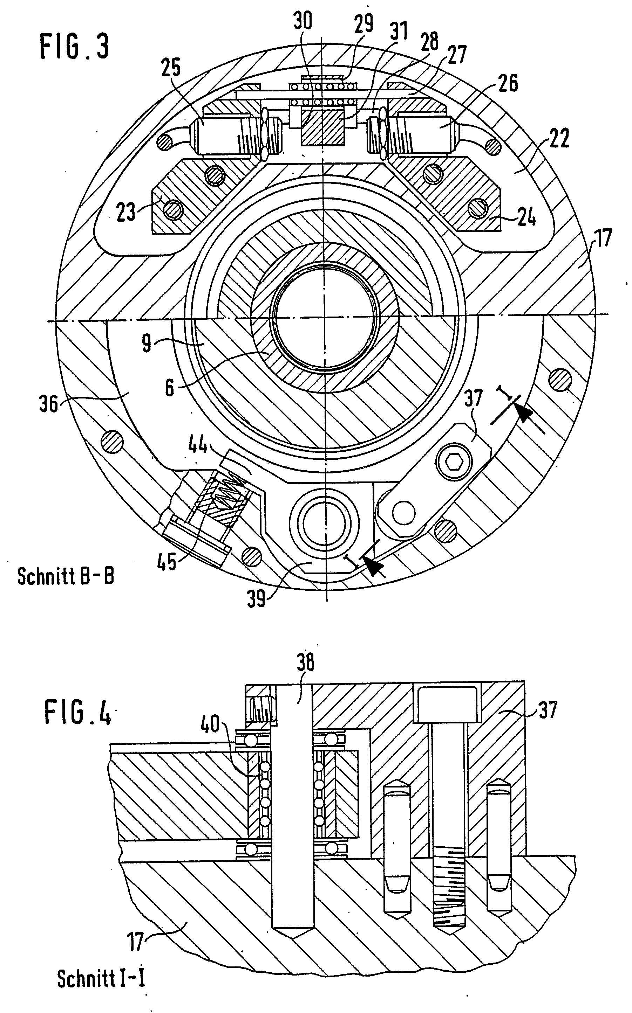

In Figur 1 ist das Vorderende des Querarms 1 eines Koordinaten-Meß-oder-Anreißgerätes dargestellt. Die vordere Stirnwand 2 ist mit einer Bohrung 3 versehen, in welche ein Ringflansch 4 eines von innen an die Stirnwand 2 des Querarms 1 angeschraubten Ringes 5 hineinragt. Durch die Bohrung des Ringes 5 reicht mit Spiel ein mehrfach abgesetzter, mit einer axialen Längsbohrung versehener Achsenstumpf 6 hindurch, der an seinem dem Querarm 1 naheliegenden Ende mit einem Außengewinde versehen ist. Auf dem Achsenstumpf 6 sitzt, sich gegen einen Bund 7 dieses Achsenstumpfes abstützend und drehfest mit dem Achsenstumpf verbunden ein Zahnrad 8, dessen Nabe 9 bis in die Bohrung 3 der Stirnwand 2 des Querarmes 1 hineinreicht und an seiner dem Flansch 4 des Ringes 5 gegenüberstehenden Stirnfläche ebenso wie der Flansch 4 mit radial verlaufenden, umfangsmäßig jeweils um beispielsweise 120° versetzten prismatischen, kerbenförmigen Nuten versehen ist. In den prismatischen Nuten des Flansches 4 einerseits und der Stirnfläche der Nabe 9 des Zahnrades 8 andererseits finden eine Zylinderrolle 10 und zwei Kugeln 11 Aufnahme, wobei gegenüber einer Anordnung mit drei Kugeln durch die Anordnung der Zylinderrolle 10 eine besser definierte Zentrierung erreicht wird.

Auf das am hinteren Ende des Achsenstumpfes 6 vorgesehene Außengewinde ist eine Mutter 12 unter Zwischenlage von Tellerringfedern 13 gegen den Ring 5 festgespannt, so daß die Zylinderrolle 10 und die Kugeln 11 zwischen den prismatischen Nuten des Flansches 4 des Ringes 5 einerseits und der Nabe 9 des Zahnrades 8 andererseits federnd eingespannt sind und der Achsenstumpf 6 in koaxialer Lage zur Längsachse des Querarmes 1 vorgespannt ist.

Auf dem Achsenstumpf 6 ist über in axialem Abstand voneinander gelegene Kugellagerpaare 14 und 15 spielfrei ein Aufnahmekopf-Zwischenstück 16 um die durch den Achsenstumpf 6 vorgegebene Drehachse verdrehbar gelagert. Das Aufnahmekopf-Zwischenstück 16 ist aus in Axialrichtung aufeinander gestapelten und zusammengespannten Ringteilen 17, 18 und 19 sowie aus am Vorderende des Aufnahmekopfes gelegenen Gehäuseteilen zusammengesetzt, die an zur Drehachse parallelen Teilfugen aneinander grenzen, wobei in Figur 2 zwei derartige Gehäuseteile mit 20 und 21 bezeichnet sind. Um die Montierbarkeit der verschiedenen Bauelemente im Bereich des Vorderendes des Aufnahmekopfes zu gewährleisten, ist dort das Aufnahmekopf-Zwischenstück aus weiteren voneinander trennbaren Gehäuseteilen gebildet, worauf jedoch hier nicht näher eingegangen zu werden braucht.

Das Ringteil 17 des Aufnahmekopf-Zwischenstückes 16 ist auf der der Stirnwand 2 des Querarmes 1 zugewandten Seite mit einer bogenförmigen Ausnehmung oder Nische 22 versehen, an deren Grund einander mit Abstand gegenüberstehende Halteblöcke 23 und 24 befestigt sind, wie aus Figur 3 hervorgeht. An den Halteblöcken 23 und 24 sind jeweils einander mit Abstand gegenüberstehende Endschalter 25 und 26 befestigt und außerdem erstrecken sich zwischen den Halteblöcken 23 und 24 Führungsstangen 27 und 28, an denen ein Betätigungsschlitten 29 geführt ist, dessen eine Betätigungsfläche 30 dem Tastorgan des Endschalters 25 gegenübersteht und dessen andere Betätigungsfläche 31 dem Tastorgan des Endschalters 26 gegenübersteht.

Ein fahnenartiger Betätigungsansatz 32 des Betätigungsschlittens 29 erstreckt sich in Radialrichtung bis in den Weg eines von der äußeren Stirnfläche des Querarmes 1 wegragenden Vorsprungs 33, derart, daß das Aufnahmekopf-Zwischenstück 16 von einer Stellung, in der beispielsweise die Betätigungsfläche 30 des Betätigungsschlittens 29 das Tastorgang des Endschalters 25 betätigt, eine Drehung von mehr als 360°, beispielsweise von 370°, ausführen kann, bis der Vorsprung 33 nach Anlaufen an der gegenüberliegenden Seite des Betätigungsansatzes 32 den Betätigungsschlitten 29 an den Führungsstäben 25 und 28 verschoben hat und die Betätigungsfläche 31 des Betätigungsschlittens 29 schließlich an dem Tastorgan des Endschalters 26 anläuft. Die Endschalter 25 und 26 dienen zur Steuerung des Drehantriebes des Aufnahmekopf-Zwischenstückes 16, worauf weiter unten noch näher eingegangen wird. An der der Stirnwand 2 des Querarmes 1 zugewandten Stirnfläche des Ringteiles 17 ist außerdem ein Ring 34 festgeschraubt, der dem Tastorgan eines durch eine Bohrung der Stirnwand 2 des Querarms 1 reichenden Fühlerschalters 35 gegenübersteht. Es können mehrere Fühlerschalter nach der Art des Fühlerschalters 35 am Umfang verteilt vorgesehen sein. Sollte ein auf den Achsenstumpf 6 von dem Aufnahmekopf-Zwischenstück 16 übertragenes Drehmoment oder Biegemoment so groß sein, daß die Kugeln 11 unter Wälzkörper 10 unter Zusammendrückung der Tellerringfedern 13 aus ihren prismatischen Nuten gerückt werden und sich die Stirnfläche der Nabe 9 gegenüber der Stirnfläche des Flansches 4 verdreht oder innerhalb der vorgesehenen Spielräume verkippt, so kommt der Fühlerschalter 35 zum Ansprechen und setzt die Antriebe des Aufnahmekopfes außer Betrieb. Die beschriebene Zentrierung des Achsenstumpfes 6 stellt also in Verbindung mit der axialen Vorspannung durch die Tellerringfedern 13 und in Verbindung mit dem Fühlerschalter 35 eine Überlastsicherung dar.

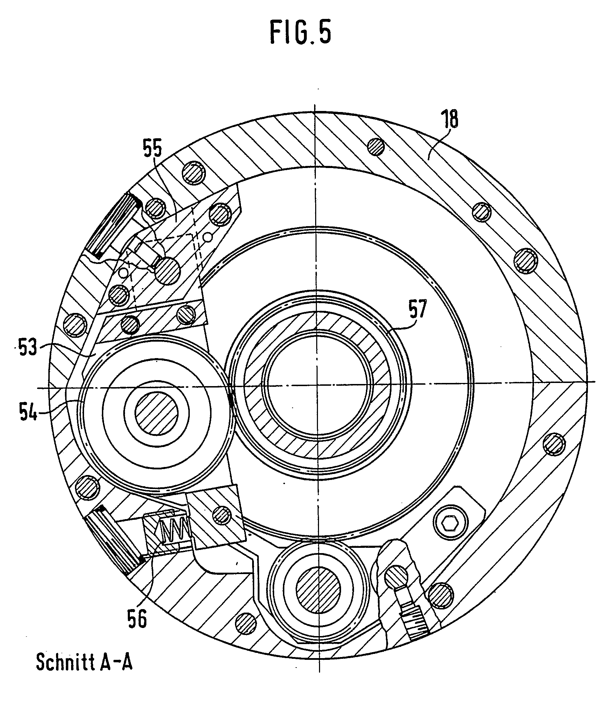

Auf der vom Querarmende abgewandten Seite des Ringteiles 17 ist dieses ebenfalls mit einer Ausnehmung versehen, die mit 36 bezeichnet ist und die aus Figur 3 ersichtliche Gestalt hat. In dieser Ausnehmung ist durch Verschraubung und Verstiftung, wie aus Figur 4 hervorgeht, ein Lagerbügel 37 befestigt, der zur Abstützung einer Lagerachse 38 dient, an welcher wiederum eine sich etwa in Umfangsrichtung erstrecke Schwinge 39 über eine spielfreie Lagerung 40 gelagert ist, deren Aufbau im einzelnen aus Figur 4 vom Fachmann ohne weiteres entnommen werden kann. Die Schwinge 39 trägt die Lager 41 für ein Wellenstück 42, an dem fliegend ein Ritzel 43 befestigt ist, das mit dem Zahnkranz des Zahnrades 8 kämmt. Die Schwinge 39 ist durch eine auf das äußere Schwingenende 44 in radialer Richtung durch eine sich gegen das Ringteil 17 abstützende Schraubenfeder 45 vorgespannt, so daß das Ritzel 43 in die Zahnung des Zahnrades 8 stets spielfrei eingreift.

Ein von dem Ritzel 53 auf der vom Querarm 1 abgewandten Seite axial wegstehender Wellenansatz 46 ist über eine einen geringen Achsenversatz zulassende Kupplung 47 mit dem Wellenansatz 48 eines weiteren Ritzels 49 gekuppelt.

Das Ritzel 49 ist in ganz entsprechender Weise wie das Ritzel 43 an einer Schwinge 50 gelagert, wobei diese Schwinge in einer dem Querarm 1 zugewandten Nische oder Ausnehmung des Ringteils 19 sowie innerhalb des Innenraumes des Ringteils 18 untergebracht ist. Die Lagerung des Ritzels 29 an einer federnd in radialer Richtung nach einwärts vorgespannten Schwinge dient dem Zwecke, das Ritzel 49 stets spielfrei in Eingriff mit dem Ausgangsritzel 51 zu halten, das mit der Ausgangswelle eines Schrittmotors 52 gekuppelt und in der aus Figur 1 ersichtlichen Weise spielfrei an einem Flanschansatz des Ringteiles 19 gelagert ist.

Der Schrittmotor 52 ist auf der vom Querarm 1 abgewandten Seite des Ringteiles 19 an diesem befestigt.

Zwischen dem Ritzel 51 und dem Ritzel oder Zahnrad 49 ist eine 1:2-Untersetzung vorgesehen, so daß sich die Untersetzung von dem Ritzel 43 zum Zahnrad 8 verdoppelt und schließlich ein Drehschritt des Schrittmotors 52 dem 1/72000-Teil einer Umdrehung des Aufnahmekopf-Zwischenstückes 16 um den Achsenstumpf 6 herum entspricht. Der Antrieb des Zahnrades 8 über das zwischengeschaltete Stirnradgetriebe mit den Zahnrädern cder Ritzeln 43 und 49 ermöglicht es, den Schrittmotor 52 in radialer Richtung näher an die Drehachse heranzurücken, so daß der Schrittmotor 52 nicht über die durch die übrigen Bauteile des Aufnahmekopfes vorgegebenen Umrisse hinaussteht.

Innerhalb des Innenraumes des Ringteiles 18 befindet sich zwischen den Ringteilen 19 und 17 eine weitere, den Schwingen 39 und 50 ähnliche Schwinge 53 zur Lagerung eines Zahnrades 54, wobei die Schwinge 53 an einem am Ringteil 17 befestigten Lagerbügel 55 spielfrei gelagert ist. Aufgrund der durch eine Schraubenfeder 56 auf die Schwinge 53 einwirkenden, im wesentlichen radial nach einwärts wirkenden Vorspannkraft wird das Zahnrad 54 mit einem Zahnkranz 57 des Achsenstumpfes 6 stets spielfrei in Eingriff gehalten. Das Zahnrad 54 ist über eine einen geringen Achsenversatz zulassende Kupplung 58 mit einem Resolver 59 gekuppelt, der eine Auflösung von sechzehn Bit aufweist, wobei die Zähnezahl der Zahnräder 54 und 57 derart geringfügig verschieden gewählt ist, daß einer Bit-Stelle des Resolvers 59 ein Drehschritt der Drehung des Aufnahmekopf-Zwischenstückes um die durch den Achsenstumpf 6 vorgegebene Drehachse von 1/72000 entspricht. Dies bedeutet eine Auflösung von 0.005$^{\circ}$.

Man erkennt, daß der Schrittmotor 52 und der Resolver 59 von dem Ringteil 19 auf der von dem Querarm 1 abgewandten Seite in Axialrichtung weit in denjenigen Teil des Aufnahmekopf-Zwischenstückes vorstehen, der im wesentlichen den Antriebselementen für die Verwirklichung der Schwenkbewegung der Befestigungsvorrichtung zum Anschluß der Meß- und Anreißwerkzeuge vorgehalten ist. Da aber die Motoren für die Drehbewegung und die Schwenkbewegung sowie jeweils zwischengeschaltete Getriebe und auch die den Einstellbewegungen jeweils zugeordneten Resolver sämtlich relativ zueinander stillstehend an dem Aufnahmekopf-Zwischenstück 16 montiert sind, ergibt sich eine sehr gedrängte Bauweise, da die Antriebe und die Resolver bei Durchführung der Einstellbewegungen lediglich allenfalls eine Drehbewegung relativ zu dem Querarm 1 ausführen. Sämtliche Anschlußleitungen und Steuerleitungen können, worauf hier nicht im einzelnen eingeganen sei, durch Bohrungen der Ringteile und Gehäuseteile sowie durch die Hohlräume des Aufnahmekopf-Zwischenstückes 16 in einen Bereich geführt werden, der vor der inneren Ausmündung der Axialbohrung des Achsenstumpfes 6 gelegen ist, und verlaufen dann durch diese Bohrung in den längslaufenden Innenraum des Querarmes 1 hinein, so daß ein sehr großes Längenstück der Anschlußleitungen und Steuerleitungen etwa entlang der Längsachse des Querarmes 1 vorhanden ist und für eine Verdrillung dieser Leitungen bei Ausführung von Drehbewegungen des Aufnahmekopfes zur Verfügung steht, wobei diese Drehbewegungen eine Drehung von 370$^{\circ}$ im allgemeinen nicht wesentlich übertreffen. Der hier angegebene Aufnahmekopf kann somit frei von äußeren Leitungsverbindungen gehalten werden, auch, soweit dies Leitungen zu den Endschaltern und Fühlerschaltern betrifft.

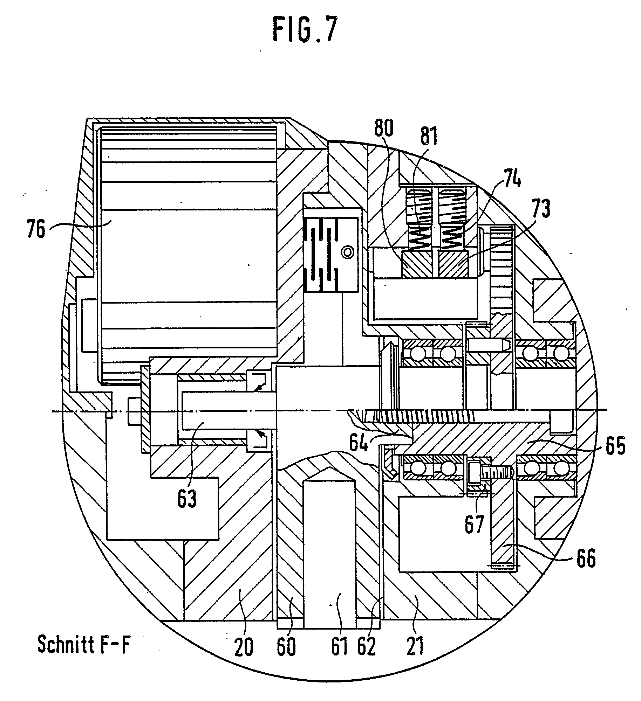

In einer zwichen den Gehäuseteilen 20 und 21 vorgesehenen, mit Bezug auf die in der Zeichnung gewählte augenblickliche Stellung des Aufnahmekopfes vertikal verlaufenden, sektorförmigen Kammer, die etwa parallel zu einer durch die Drehachse gelegten Ebene ausgerichtet ist, befindet sich eine hebelförmige Befestigungsvorrichtung 60 mit einer Aufnahmebohrung 61 zum Anschluß eines Meß- oder Anreißwerkzeugs. Einzelheiten der Befestigungsvorrichtung sind in der Zeichnung zur Vereinfachung der Darstellung nicht gezeigt. Die sektorförmige Kammer zwischen den Gehäuseteilen 20 und 21 ist mit 62 bezeichnet. Von der Befestigungsvorrichtung in Gestalt des Hebels 60 ragen beidseitig quer zur Achse der Bohrung 61 verlaufende Wellenstümpfe 63 und 64 weg, durch welche eine Schwenkachse der Befestigungsvorrichtung vorgegeben ist, die senkrecht zu der durch den Achsenstumpf 6 vorgegebenen Drehachse orientiert ist. Wie man aus Figur 7 ersieht, ist der Wellenstumpf 63 in dem Gehäuseteil 20 spielfrei gelagert und der Wellenstumpf 64 ist über einen an ihm befestigten Zahnsegmentträger 65 in dem Gehäuseteil 21 bzw. einem damit verbundenen weiteren Gehäuseteil mittels der Kugellagerpaare spielfrei gelagert. An dem Zahnsegment 66 größeren Durchmessers ist ein Zahnkranz 67 geringeren Durchmessers, wie ebenfalls aus Figur 7 hervorgeht, festgeschraubt.

Mit dem Zahnsegment 66 befindet sich ein Ritzel 68 in Eingriff, das fest mit einer Welle 69 verbunden ist, die spielfrei an einer Schwinge 70 gelagert ist. Die Schwinge 70 ist ihrerseits vermittels eines Lagerbockes 71 und einer Achse 72 in einer nach außen weisenden Ausnehmung des Gehäuseteiles 21 gelagert und vermittels eines Schwingenansatzes 73, auf den eine Schraubenfeder 74 einwirkt, in radialer Richtung nach einwärts vorgespannt, so daß das Ritzel 68 stets spielfrei mit der Zahnung des Zahnsegmentes 66 in Eingriff gehalten wird.

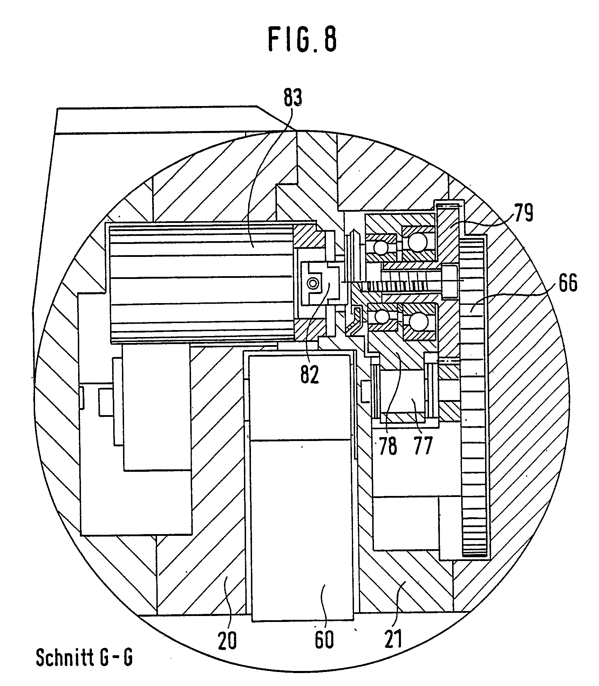

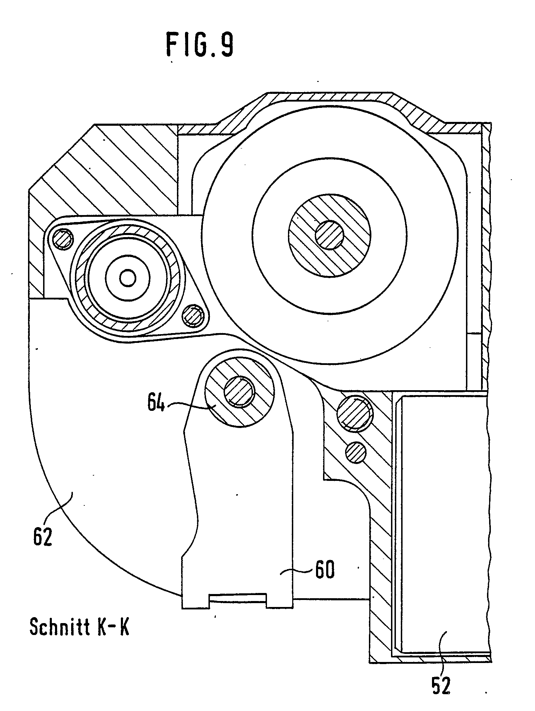

Auf der von dem Ritzel 68 abgekehrten Seite ist die Welle 69 mit einer einen geringen Achsenversatz zulassenden Kupplung 75 verbunden, die ihrerseits mit der Ausgangswelle eines weiteren Schrittmotors 76 gekuppelt ist. Der Schrittmotor 76 befindet sich in dem Innenraum des Gehäuseteiles 20 und eines damit verbundenen, weiteren Gehäuseteils und ragt, wie aus den Figuren 7, 8 und 9 erkennbar, nur geringfügig über den allgemeinen Umriß des Aufnahmekopf-Zwischenstückes vor.

Innerhalb des sich zur Seite hin öffnenden Innenraumes und des Gehäuseteiles 21 und des daran angesetzten weiteren Gehäuseteiles befindet sich an einer spielfrei am Gehäuseteil 21 bei 77 gelagerten Schwinge 78, ebenfalls spielfrei gelagert, ein Zahnrad 79, welches aufgrund der Federvorspannung der Schwinge 78 über den Schwingenansatz 80 und eine Schraubenfeder 81 stets spielfrei in Eingriff mit der Zahnung des Zahnkranzes 67 gehalten wird.

Auf der von dem Zahnrad 79 abgekehrten Seite ist die das Zahnrad 79 tragende Welle über eine einen geringen Achsenversatz zulassende Kupplung 82 mit der Ausgangswelle eines Resolvers 53 gekuppelt, der in Gehäuseausnehmungen der Gehäuseteile 21 und 20 sowie mit letzterem verbundener weiterer Gehäuseteile Aufnahme findet. Für den Resolver 83 gilt entsprechendes wie zuvor für den Resolver 59 ausgeführt.

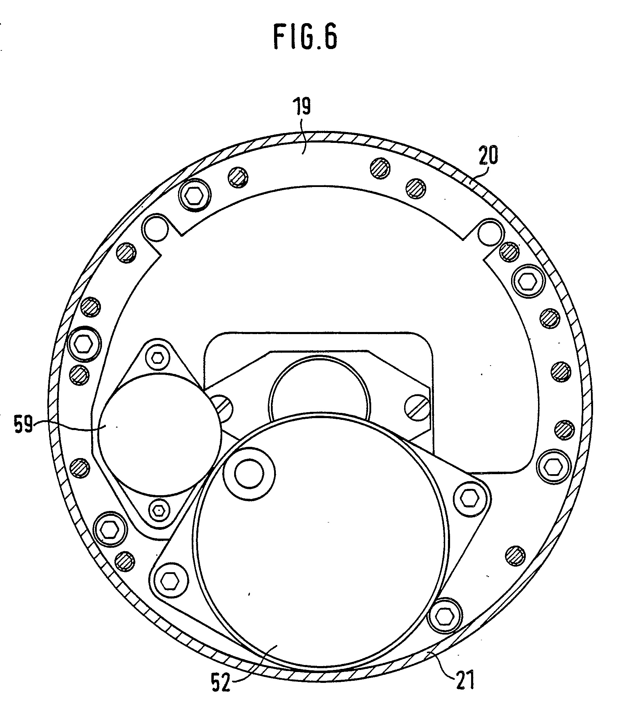

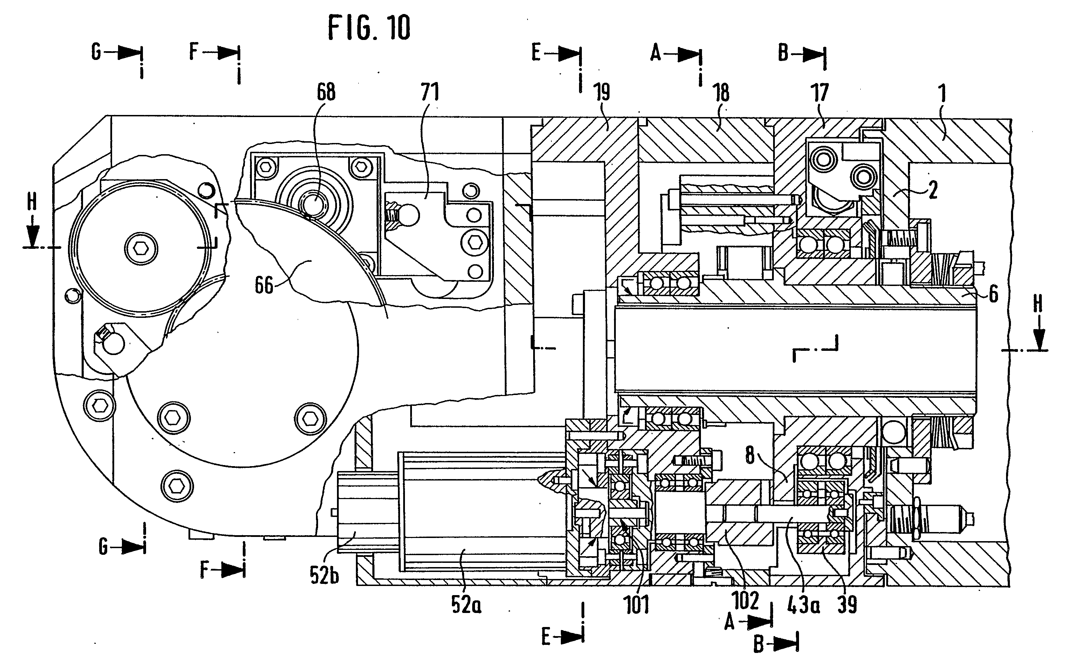

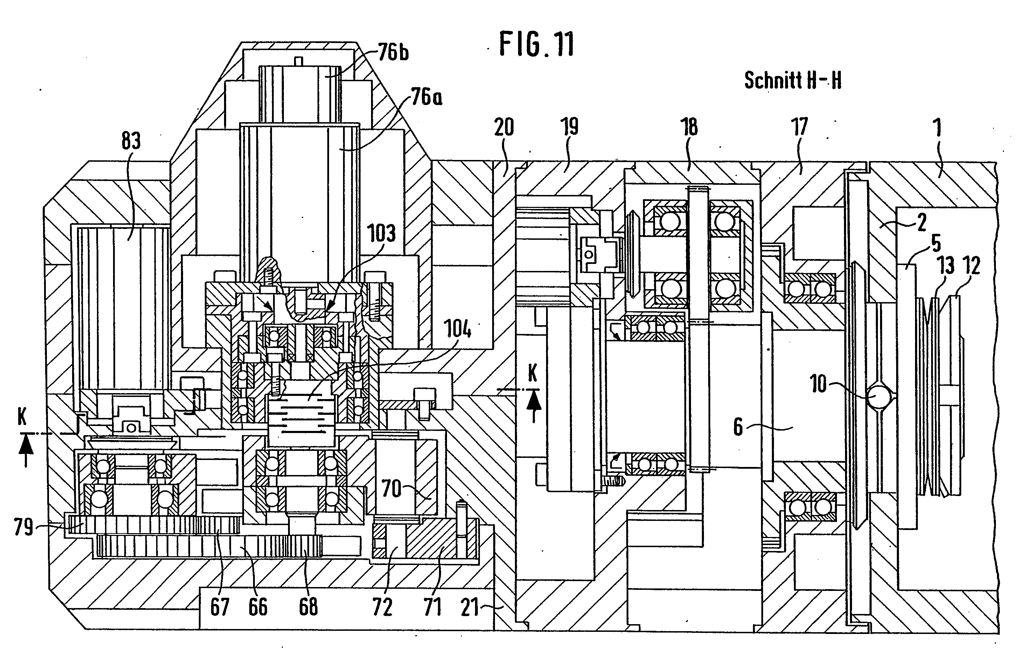

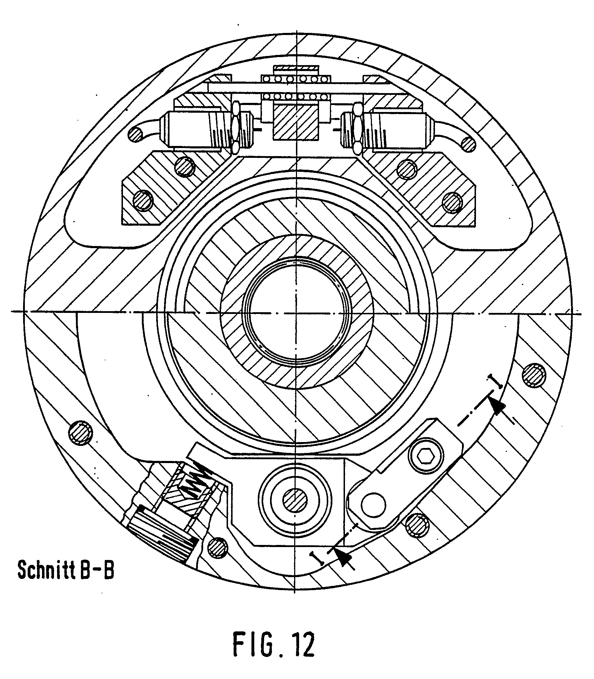

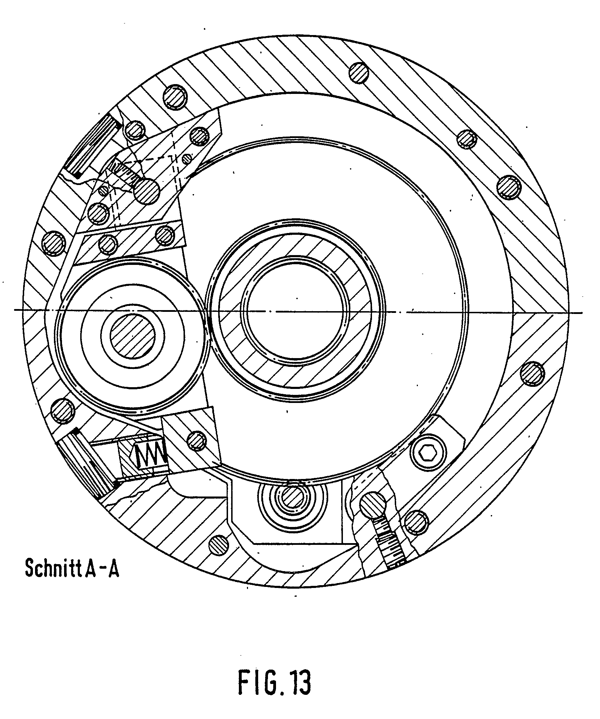

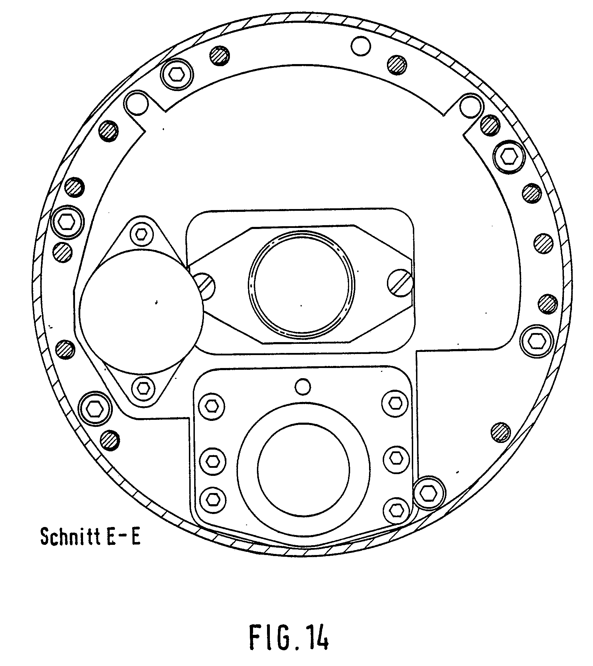

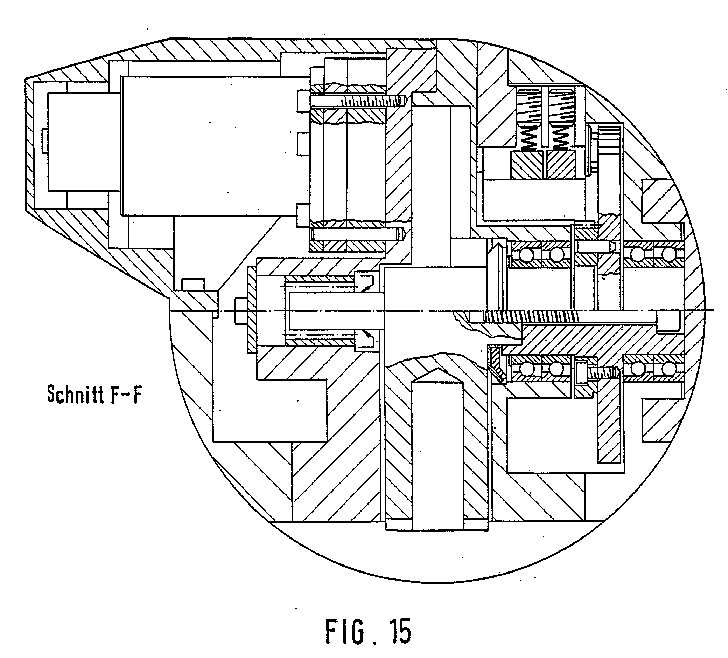

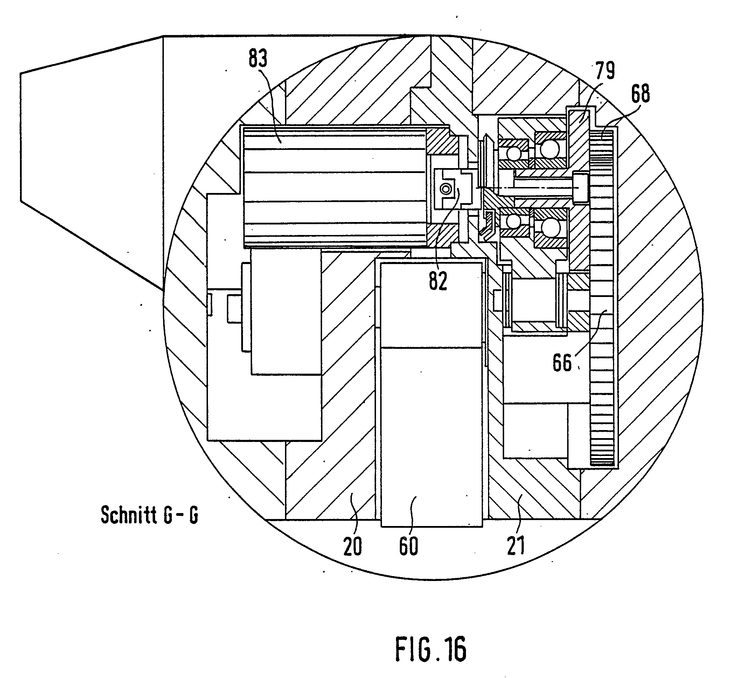

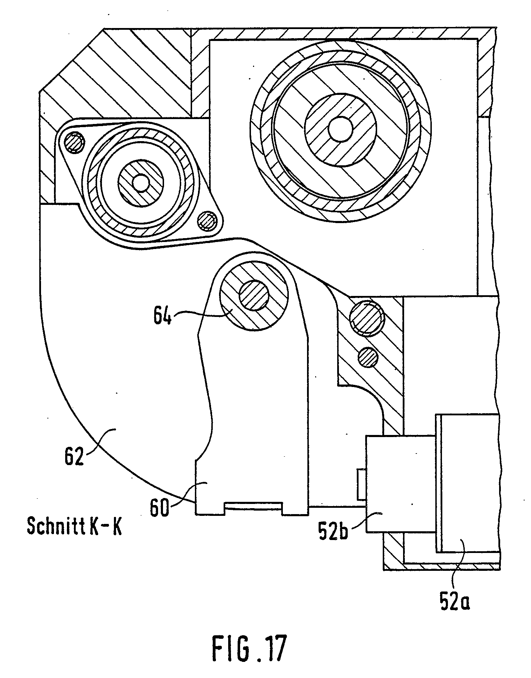

Die Ausführungsform nach den Figuren 10 bis 17 unterscheidet sich von der Ausführungsform nach den Figuren 1 bis 9 dadurch, daß anstelle der Schrittmotoren 52 und 76 der zuvor beschriebenen Ausführungsform bei derjenigen nach den Figuren 10 bis 17 Gleichstrommotoren 52a bzw. 76a mit jeweils angesetzten Tachogeneratoren 52b bzw. 76b vorgesehen sind. Der Gleichstrommotor 52a ist mit einem allgemein mit 101 bezeichneten Harmonic-Drive-Getriebe gekuppelt, dessen Ausgangswelle unmittelbar in dem Ringteil 19 gelagert und abgestützt ist und mit einem einen Achsenversatz zulassenden Kupplungsteil 102 verbunden ist, das seinerseits mit einem von dem Ritzel 43a wegstehenden Wellenstumpf gekuppelt ist. In der Triebverbindung zwischen dem Drehantriebsmotor in Gestalt des Gleichstrommotors 52a und dem Zahnrad 8 befindet sich somit im Gegensatz zur zuvor beschriebenen Ausführungsform nur ein an einer Schwinge, nämlich der Schwinge 39, gelagertes Zahnrad oder Ritzel. Wegen des geringeren Außendurchmessers des Gleichstrommotors 52a ist es nicht notwendig, zur Erzielung einer gedrängten Bauweise einen Versatz zwischen der Motorachse und der Achse des Ritzels 43a vorzusehen.

Der Schwenkantriebsmotor 76a in Gestalt eines Gleichstrommotors und der zugehörige Tachogenerator 76b sind in Gehäuseausnehmungen von mit dem Gehäuseteil 20 verbundenen weiteren Gehäuseteilen untergebracht, wobei ein mit dem Gleichstrommotor 76a fest verbundenes Harmonic-Drive-Getriebe 103 über Durchbrüche der Gehäuseteile 20 und 21 in Achsenrichtung hindurchreicht und die Ausgangswelle des Harmonic-Drive-Getriebes 103 über ein einen geringen Achsenversatz zulassendes Kupplungsteil 104 mit einer Welle gekuppelt ist, die an der Schwinge 70 gelagert ist und am äußeren Ende das Ritzel 68 trägt, wie dies bereits für die zuvor beschriebene Ausführungsform im einzelnen ausgeführt wurde.

Man erkennt, daß der Gleichstrommotor 52a und der angesetzte Tachogenerator 52b sowie auch der Gleichstrommotor 76a und der angesetzte Tachogenerator 76b jeweils größere Axiallänge besitzen. Der Schwenkantriebsmotor mit seinem Tachogenerator sind daher in mit entsprechenden Ansätzen versehenen, seitlich von dem Aufnahmekopf wegragenden Gehäuseteilen untergebracht, wobei diese Gehäuseansätze jedoch wiederum nicht in unzuträglichem Maße von den allgemeinen Umrissen des Aufnahmekopfes wegragen und sich außerdem auf derjenigen Seite des Aufnahmekopf-Zwischenstückes 16 befinden, welche von dem Arbeitsbereich der Befestigungsvorrichtung 60 entfernt ist.

Die übrigen Einzelteile der Ausführungsform nach den Figuren 10 bis 17 unterscheiden sich nicht wesentlich von den entsprechenden Teilen der Ausführungsform nach den Figuren 1 bis 9, so daß bezüglich der Beschreibung dieser Teile auf die Erläuterungen zu den Figuren 1 bis 9 verwiesen sei.

## Ansprüche

1. Am Ende eines Querarms (1) eines Meß- oder Anreißgerätes befestigbarer Aufnahmekopf mit einer am Aufnahmekopf-Vorderende vorgesehenen, zur Halterung eines Meß- oder Anreißwerkzeugs dienenden Befestigungsvorrichtung (60), die über eine senkrecht zur Querarmlängsachse verlaufende Schwenkachse (63, 64) mit einem Aufnahmekopf-Zwischenstück (16) verbunden ist, das über eine zur Querarmlängsachse parallele oder mit ihr übereinstimmende Drehachse (6) mit einem an dem Querarmvorderende befestigbaren Anschlußstück (5, 6) drehbar verbunden ist, dadurch gekennzeichnet, daß von dem Anschlußstück die Drehachse (6) als mit dem Anschlußstück drehfest gekuppelter Achsenstumpf (6) in Richtung der Querarmlängsachse wegragt und mit einem Zahnkranz (8) versehen ist, in den ein Abtriebsritzel eines Drehantriebs (52, 51, 49 bzw. 52a, 52b, 101) eingreift, der am Aufnahmekopf-Zwischenstück (16) befestigt ist, das an dem Achsenstumpf (6) gelagert (14, 15) ist, seinerseits zur Lagerung der Schwenkachse (63, 64) dient und außer dem Drehantrieb noch einen Schwenkantrieb (76 bzw. 76a) trägt, dessen Antriebsritzel (68) in einen an der Schwenkachse vorgesehenen Zahnkranz (66) eingreift.

2. Aufnahmekopf nach Anspruch 1, gekennzeichnet durch eine solche Anordnung des Drehantriebs und des Schwenkantriebs mit Bezug auf die Richtung der Drehachse, daß bei Drehung des Aufnahmekopf-Zwischenstückes (16) der Drehantrieb und der Schwenkantrieb sich in einander in Axialrichtung teilweise durchsetzenden Zylinderräumen oder Hohlzylinderräumen bewegen.

3. Aufnahmekopf nach Anspruch 1 oder 2, dadurch gekennzeichnet, daß der Achsenstumpf (6) und die Schwenkachse (63, 64) jeweils mit weiteren Zahnkränzen (57, 67) versehen sind, in welche Antriebsritzel von Resolvern (59, 83) eingreifen, die ebenfalls an dem Aufnahmekopf-Zwischenstück (16) befestigt sind.

4. Aufnahmekopf nach einem der Ansprüche 1 bis 3, dadurch gekennzeichnet, daß der Achsenstumpf (6) mit einer Längsbohrung versehen ist, durch welche Anschlußleitungen und Steuerleitungen des Drehantriebs, des Schwenkantriebs und gegebenenfalls der Resolver und, gegebenenfalls, von Steuerschaltern, geführt sind.

5. Aufnahmekopf nach einem der Ansprüche 1 bis 4, dadurch gekennzeichnet, daß die in die Zahnkränze (8, 57, 66, 67) des Achsenstumpfes (6) und/oder der Schwenkachse (63, 64) eingreifenden Ritzel (43, 54, 68, 79) jeweils gesondert mittels spielfreier, vorgespannter Lager an Schwingen (39, 50, 53, 70, 78) gelagert sind, die wiederum über spielfreie, vorgespannte Lager an Lagerachsen des Aufnahmekopf-Zwischenstückes (16) gelagert sind und gegen die jeweiligen Zahnkränze hin vorgespannt sind und daß Wellenstimpfe der Ritzel über geringen Achsenversatz ausgleichende Kupplungen (47, 58, 75, 82) mit den Ausgangswellen des Drehantriebs bzw. des Schwenkantriebs bzw. der Resolver gekuppelt sind.

6. Aufnahmekopf nach einem der Ansprüche 1 bis 5, dadurch gekennzeichnet, daß das Aufnahmekopf-Zwischenstück (16) auf der dem Anschlußstück (5) benachbarten Seite aus mehreren, in Drehachsenrichtung aufeinander gestapelten und zusammengespannten Ringteilen (17, 18, 19) und an der die Lagerung für die Schwenkachse (63, 64) enthaltenden Seite aus in Richtung der Schwenkachse zusammengesetzten und zusammengespannten Gehäuseteilen (20, 21,...) gebildet ist.

7. Aufnahmekopf nach Anspruch 5 und Anspruch 6, dadurch gekennzeichnet, daß die Ringteile (17, 18, 19) und/oder die Gehäuseteile (20, 21,...) mit Durchbrüchen und Nischen zur Aufnahme der die Ritzel tragenden, vorgespannten Schwingen und des Drehantriebs und des Schwenkantriebs und gegebenenfalls der Resolver versehen sind.

8. Aufnahmekopf nach einem der Ansprüche 1 bis 7, dadurch gekennzeichnet, daß der Achsenstumpf (6) durch das Anschlußstück (5) hindurchreicht und hinter einer mit einer Bohrung versehenen Stirnwand (2) des Querarms unter Zwischenlage von Federmitteln, insbesondere in Gestalt von den Achsenstumpf umgebenden Tellerfederringen (13) festgespannt ist, daß das Anschlußstück und ein am Achsenstumpf (6) befestigter Ringflansch an einander gegenüberstehenden radialen Ringflächen drei in Umfangsrichtung verteilte, radial verlaufende prismatische Nuten dreieckigen Querschnittes aufweisen, in denen drei Kugeln und/oder Walzen (10, 11) Aufnahme finden, die zwischen je einer Nut des Anschlußstückes (5) und des Ringflansches (9) aufgrund der Vorspannung der zwischengelegten Federmittel bzw. Tellerringfedern (13) federnd eingespannt sind und daß ein zwischen dem Querarmende und der gegenüberliegenden Fläche des Anschlußkopf-Zwischenstückes wirksamer Fühlerschalter (35), der zur Steuerung des Drehantriebs und/oder des Schwenkantriebs dient, auf eine bereichsweise Entfernungsbewegung oder Annäherungsbewegung der Stirnfläche des Anschlußkopf-Zwischenstückes gegenüber der Querarmstirnfläche anspricht.

9. Aufnahmekopf nach einem der Ansprüche 1 bis 8, dadurch gekennzeichnet, daß der Drehantrieb ein mit dem ihm zugeordneten Ritzel (43) über ein Untersetzungsgetriebe gekuppelter Schrittmotor ist.

10. Aufnahmekopf nach einem der Ansprüche 1 bis 8, dadurch gekennzeichnet, daß der Drehantrieb ein mit dem ihm zugeordneten Ritzel (43a) über ein Harmonic-Drive-Getriebe gekuppelter, mit einem Tachogenerator (52b) verbundener Gleichstrommotor (53a) ist.

11. Aufnahmekopf nach einem der Ansprüche 1 bis 10, dadurch gekennzeichnet, daß der Schwenkantrieb ein Schrittmotor (76) ist.

12. Aufnahmekopf nach einem der Ansprüche 1 bis 10, dadurch gekennzeichnet, daß der Schwenkantrieb ein mit dem ihm zugeordneten Ritzel (68) über ein Harmonic-Drive-Getriebe gekuppelter Gleichstrommotor (76a) mit einem damit verbundenen Tachogenerator (76b) ist.

13. Aufnahmekopf nach einem der Ansprüche 1 bis 12, dadurch gekennzeichnet, daß an dem Aufnahmekopf-Zwischenstück (16) einander im Abstand in Umfangsrichtung gegenüberstehende Endschalter (25, 26) zur Steuerung des Drehantriebs und ein zwischen deren Tastorganen an einer Schiebeführung (27, 28) verschiebbarer Betätigungsschlitten (29) angeordnet sind, welcher mittels eines von dem Querarmvorderende axial wegragenden Betätigungsvorsprungs (33), der bei Drehung des Aufnahmekopfes in der einen oder anderen Richtung entweder an der einen oder der anderen Betätigungsfläche des Betätigungsschlittens anläuft, bis zur Betätigung eines der Endschalter verschiebbar ist, derart, daß der Aufnahmekopf von einer Dreh- Grenzstellung bis zur jeweils anderen Dreh-Grenzstellung um mehr als 360° verdrehbar ist.

FIG.1

**FIG.2**  Schnitt H-H

EP 0 302 291 A1

# FIG.3

25 30 29 31 28 27 26 22

23 24 17

9

6

36

44

45

37

39

Schnitt B-B

# FIG.4

38

40

37

17

Schnitt I-I

EP 0 302 291 A1

FIG.5

Schnitt A-A

# FIG.6

EP 0 302 291 A1

# FIG.7

Schnitt F-F

# FIG.8

Schnitt G-G

# FIG.9

Schnitt K-K

64

62

60

52

FIG. 10

FIG.11

Schnitt H-H

Schnitt B-B

FIG. 12

Schnitt A - A

FIG. 13

Schnitt E-E

FIG.14

Schnitt F-F

FIG . 15

Schnitt G - G

FIG.16

64

62

60

Schnitt K-K

52b

52a

FIG.17

Europäisches
Patentamt

**EUROPÄISCHER RECHERCHENBERICHT**

Nummer der Anmeldung

EP 88111536.4

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| D,A | DE - A1 - 3 440 527 (MORA)<br>* Gesamt *<br>-- | 1 | G 01 B 21/.04<br>G 01 D 11/30 |
| A | DE - A1 - 2.946 271 (VEREINIGTE FLUGTECHN.)<br>* Gesamt *<br>-- | | |
| D,A | DE - A1 - 3 406 045 (MORA)<br>* Gesamt *<br>---- | | |

**RECHERCHIERTE SACHGEBIETE (Int. Cl.4)**

G 01 B  3/00
G 01 B  5/00
G 01 B  7/00
G 01 B 21/00
G 01 D 11/00
B 23 Q  1/00
B 23 Q 16/00
B 23 Q 17/00
B 25 H  7/00

Der vorliegende Recherchenbericht wurde für alle Patentansprüche erstellt.

| Recherchenort | Abschlußdatum der Recherche | Prüfer |
|---|---|---|
| WIEN | 24-11-1988 | TOMASELLI |